(19) Europäisches Patentamt
European Patent Office
Office européen des brevets

(11) EP 3 355 289 A1

(12) EUROPEAN PATENT APPLICATION

(43) Date of publication:
01.08.2018 Bulletin 2018/31

(51) Int Cl.:
G08B 13/24 (2006.01)     G01S 13/88 (2006.01)

(21) Application number: 18153319.1

(22) Date of filing: 24.01.2018

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD TN

(30) Priority: 25.01.2017 US 201715414863

(71) Applicant: Honeywell International Inc.
Morris Plains, NJ 07950 (US)

(72) Inventors:
• HUANG, Jessie
Morris Plains, NJ New Jersey 07950 (US)
• TIANFENG, Zhao
Morris Plains, NJ New Jersey 07950 (US)
• XIA, Xiaomin
Morris Plains, NJ New Jersey 07950 (US)
• FU, Ma
Morris Plains, NJ New Jersey 07950 (US)

(74) Representative: Houghton, Mark Phillip
Patent Outsourcing Limited
1 King Street
Bakewell, Derbyshire DE45 1DZ (GB)

(54) APPARATUS AND METHOD FOR ACCURATE MONITORING OF SPACE

(57)    An intrusion device having an electromagnetic wave transmitter and receiver with a transmitting and receiving antenna, respectively. The transmitter and receiver may be connected to a microcontroller. The device may operate in a microwave and passive infrared range, and detect speed and position of an intruder, such as an object or a person. The device may be customized to indicate intruders within a certain range of speed and range of distances. Further, the device may have a field of view that may be varied. The device may indicate a direction of movement of the intruder. The transmitter, receiver, controller and antenna may be contained on a compact printed circuit board. Much of the electronics may be incorporated on a monolithic integrated circuit. The customization or adjustment of ranges of speed, slow and fast limits, and distance, near and far limits, may be a reason to regard the device as smart.

## FIG. 4

EP 3 355 289 A1

**Description**

Background

The present disclosure pertains to detectors and particularly object detectors. More particularly, the disclosure pertains to infrared and microwave detectors.

Summary

The disclosure reveals an intrusion device having an electromagnetic wave transmitter and receiver with a transmitting and a receiving antenna, respectively. The transmitter and receiver may be connected to a microcontroller. The device may operate in a microwave and passive infrared (IR) range. The device may detect a speed and position of an intruder, such as an object or a person. The device may be customized to indicate intruders within a certain range of speed and range of distances. Further, the device may have a field of view that may be varied. The device may indicate a direction of movement of the intruder. The transmitter, receiver, controller and antenna may be contained on a compact printed circuit board. Much of the electronics may be incorporated on a monolithic integrated circuit. The customization or adjustment of ranges of speed, between slow and fast limits, and of distance, between near and far limits, may be a reason to regard the device as smart. The present invention addresses the problem of false alarms, such as in an intrusion detection device suitable for use in an alarm system. Such devices are prone to false alarms from items such as insects and swaying vegetation being confused with an intruder such as a human being.

Brief Description of the Drawing

Figure 1 is a diagram of a dual-tech intrusion device;
Figure 2 is a diagram of an activity flow for microwave status detection
Figure 3 is a diagram of a mechanism incorporating selective space monitoring;
Figure 4 is a diagram of an illustrative example of a microwave security device;
Figure 5 is a diagram of a transmitted signal from the device of Figure 4;
Figure 6 is a diagram of a received signal from the device of Figure 4;
Figure 7 is a diagram a signal mixing circuit of a transceiver in the example security device;
Figure 8 is a diagram of an example signal from the mixing circuit;
Figure 9 is a diagram of an example an intermediate frequency signal in the security device;
Figure 10 is a diagram of a Doppler principle that may be incorporated by device;
Figure 11 is a diagram of a frequency-shift keying ranging principle that may be incorporated in the security device;
Figure 12 is a diagram showing a graph illustrating a frequency modulated continuous wave principle;
Figure 13 is a diagram that shows another basis for the present system;
Figure 14 is a diagram of an advanced intrusion device on a printed circuit board;
Figure 15 is a diagram of an example antenna assembly for the intrusion device;
Figure 16 is a diagram of properties of an example antenna assembly for the intrusion device; and
Figure 17 is a diagram of a graphed curve revealing a parameter of the antenna assembly.

Description

The present system and approach may incorporate one or more processors, computers, controllers, user interfaces, wireless and/or wire connections, and/or the like, in an implementation described and/or shown herein.
This description may provide one or more illustrative and specific examples or ways of implementing the present system and approach. There may be numerous other examples or ways of implementing the system and approach.
Aspects of the system or approach may be described in terms of symbols in the drawing. Symbols may have virtually any shape (e.g., a block) and may designate hardware, objects, components, activities, states, steps, procedures, and other items.
An intrusion device, such as a dual-tech (PIR and MW) type, may rely on an intruder moving actions in an uncertain scope of a detection window to detect them.
The intrusion device of the present invention may be intrusion device of, or for use in, an alarm system such as used in premises security or monitoring.
From the MW (microwave) detection side, the device may not be reliable because it could easily trigger false alarms by big objects even at far distances (such as a passing train, big truck far away, and so on) and very small insects (such as a fly, and so on) passing nearby the cover of the device. The present invention, such as when combining electromagnetic radiation used for PIR and MW sensing in combination can enable such false alarms to be reduced. Furthermore, the device cannot necessarily monitor a customized space with fewer false alarms that a user requests, such as an accurate square space fence. Therefore, the existing intrusion devices for intrusion detection are not necessarily accurate and reliable, and may easily trigger false alarms under some interferences.

To solve the requirement and requests mentioned herein, the present approach (of the present invention, the approach) may be based on smart MW. That is, this way may detect the speed and position of an intruder; further, this approach may monitor an accurate monitoring space and a certain speed intruder that can meet some customized requests, such as if an intruder is in some space, then the approach may trigger alarm, and if the intruder is in another space (such as where accuracy is compromised) then an alarm need not be triggered. In addition, the approach may monitor certain speed range intruder; if an intruder speed is not in the monitor range (such as a pre-defined range of speed), and then the approach will not necessarily trigger an alarm, so the approach may be very useful in defining an intruder's position and type. This approach may be on a smart MW application and may co-work with PIR.

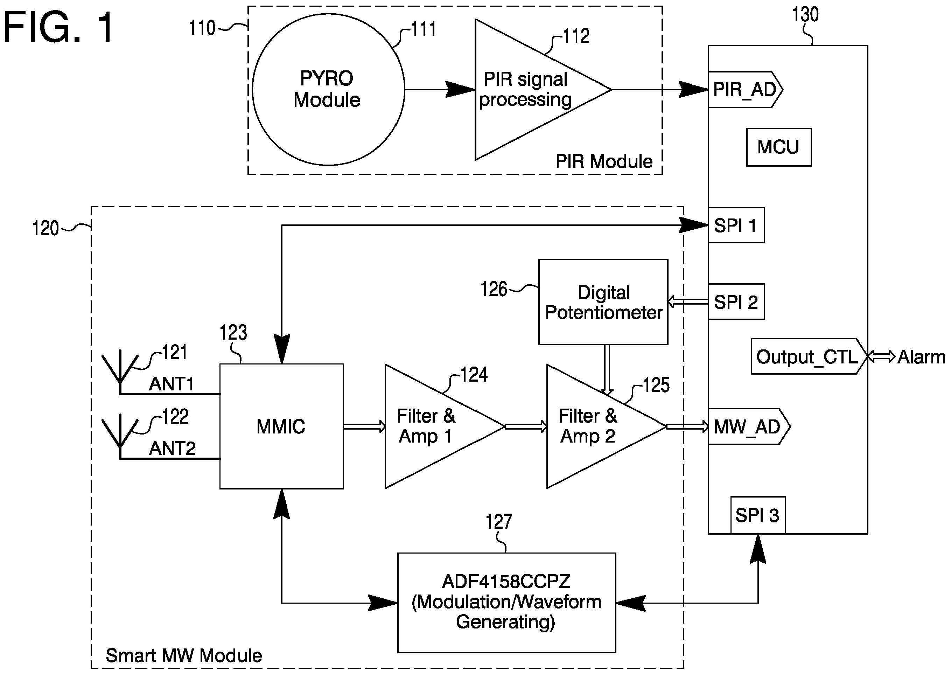

Figure 1 is a diagram of a dual-tech intrusion device. The device may incorporate a PIR (passive infrared) module 110, which is the PIR channel, and a smart MW (microwave) module 120, which may be based on a MMIC (microwave monolithic integrated circuit). Moreover, a digital potentiometer may adjust the gain of MW IF (Intermediate Frequency) signal processing controlled by MCU (microcontroller) unit 130, this enables rapid and accurate adjustment. The MCU may control a modulation/waveform generating module to send out a VCO (voltage-controlled oscillator) control signal to drive the MMIC module. Also, the block diagram may incorporate a MCU unit 130 for sampling the processed MW IF signal and according to an algorithm workflow to decide whether there are intruders or not in an appointed scope, such as accurate monitoring space.

For further detail of the circuit in Figure 1, PIR Module 110 may have a PYRO module 111, which puts out a PIR signal to a processing device 112. An output of device 112 may go to PIR_AD input at MCU 130. Two antennas 121 and 122 may be connected to MMIC 123. An output from MMIC 123 may go to a first filter and amplifier 124. An output from filter and amplifier 124 may go to filter and amplifier 125. A voltage may go to filter and amplifier 125 from a digital potentiometer 126. A voltage control signal may go from a serial peripheral interface (SPI 2) of MCU 130 to digital potentiometer 126. To go to is to provide a signal output as provided by the normal function of the named device to the further device. A two-way connection may be between MMIC 123 and SPI 1 of MCU 130. Another two-way connection may be between SPI 3 of MCU 130 and a modulation waveform generator 127. A two-way connection may be between modulation waveform generator 127 and MMIC 123. An output from filter and amplifier 125 may go to a MW_AD terminal of MCU 130. An Output_CTL (control) may have a two-way connection with an alarm.

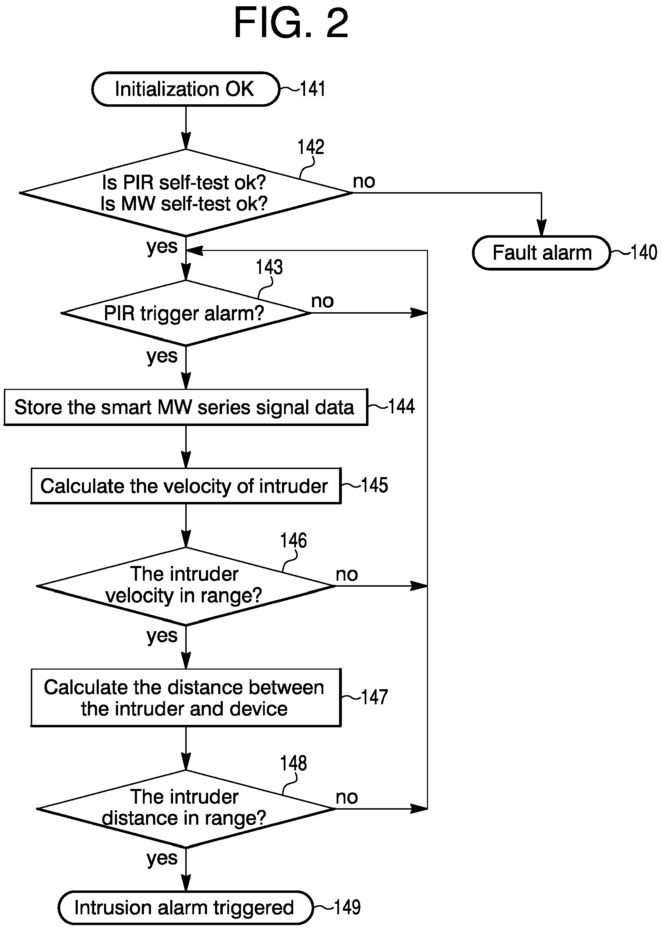

Figure 2 is a diagram of a workflow for MW status detecting, including a specific algorithm processing apparatus and approach. To begin, initialization of the system may be checked at symbol 141. If the initialization is accepted, then a question of whether the PIR self-test is accepted and the MW self-test is accepted may be asked at symbol 142. If either self-test is not accepted, then a fault alarm at symbol 140 may go off. If both self-tests are accepted, then a question whether the PIR triggers an alarm, may be asked at symbol 143. If the answer is no, then the question at symbol 143, may be asked again. If the answer is yes, then the smart MW series signal data may be stored according to symbol 144. At symbol 145, a velocity of an intruder may be calculated. A question of whether the velocity of the intruder is within a predetermined range may be asked at symbol 146. If an answer is no, then a return to symbol 143 may be made. If the answer is yes, then a distance between the intruder and the preset device may be calculated at symbol 147. At symbol 148, whether the distance between the intruder and the device is within a predetermined range may be asked. If an answer is no, then a return to symbol 143 may be made. If the answer is yes, then an intrusion alarm may be triggered.

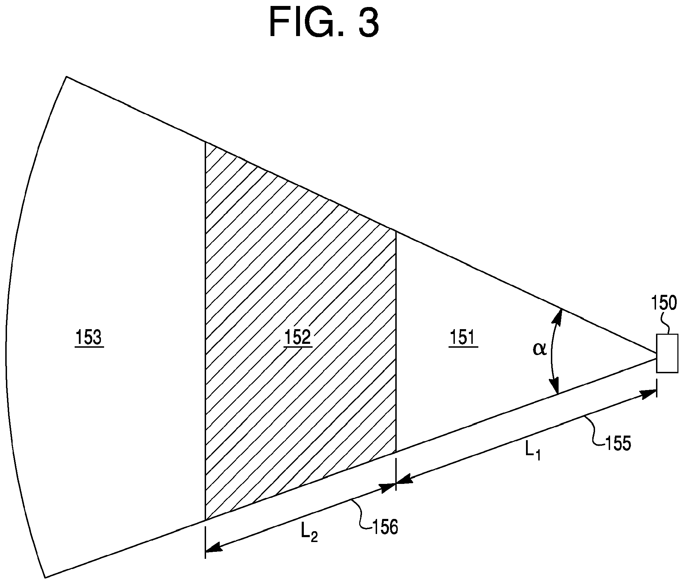

The present approach (as provided in the present invention) may enable a dual-tech intrusion device to improve intrusion-detecting accuracy, such as to address the problem of false alarms. It may also provide customized monitor space, and so forth. An approach for accurate monitoring space based on the present apparatus is shown in a diagram of Figure 3 as following, which cannot necessarily be implemented or achieved by a traditional dual-tech, because any movement will trigger alarm within its scope. The diagram reveals a detecting sensor 150, monitor space 152 that may monitor intruders (if there is an intruder's break in, then an MW alarm may be triggered). On the other hand, there may be two spaces 151 and 153 where intruders are not necessarily monitored. This approach may involve selective space monitoring. The diagram of detecting sensor 150 having a horizontal field of view of angle alpha. A monitored space 152 may be situated between a non-monitored space 151 and a non-monitored space 153. A beginning of monitored space 152 may be a length 155 (L1) from detecting sensor 150. An end of the monitored space 152 may be a length 156 (L2) plus the length 155 from detecting sensor 150.

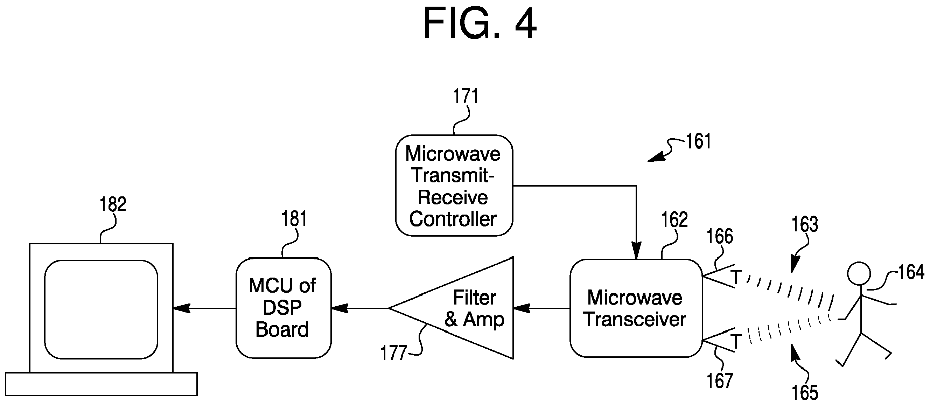

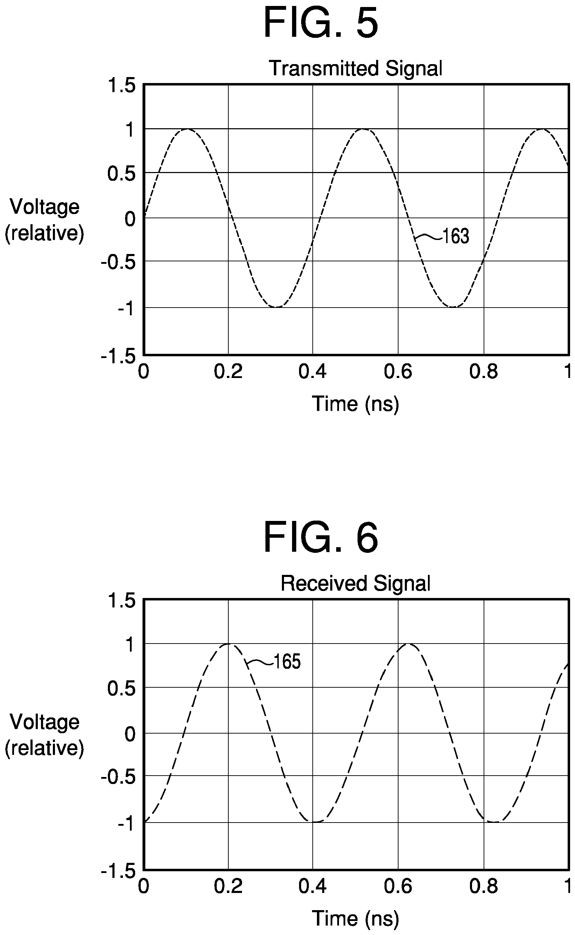

Figure 4 is a diagram of a microwave security device 161. A microwave transceiver 162 may transmit a signal 163. Signal 163 may hit an object 164, such as an intruder. Object 164 may reflect signal 163 as a received signal 165 at transceiver 162. Transmitted signal 163 may be emanated from an antenna 166 and reflected signal 165 may be received at an antenna 167. Transmitted signal 163 is shown in a diagram of Figure 5. Received signal 165 is shown in a diagram of Figure 6.

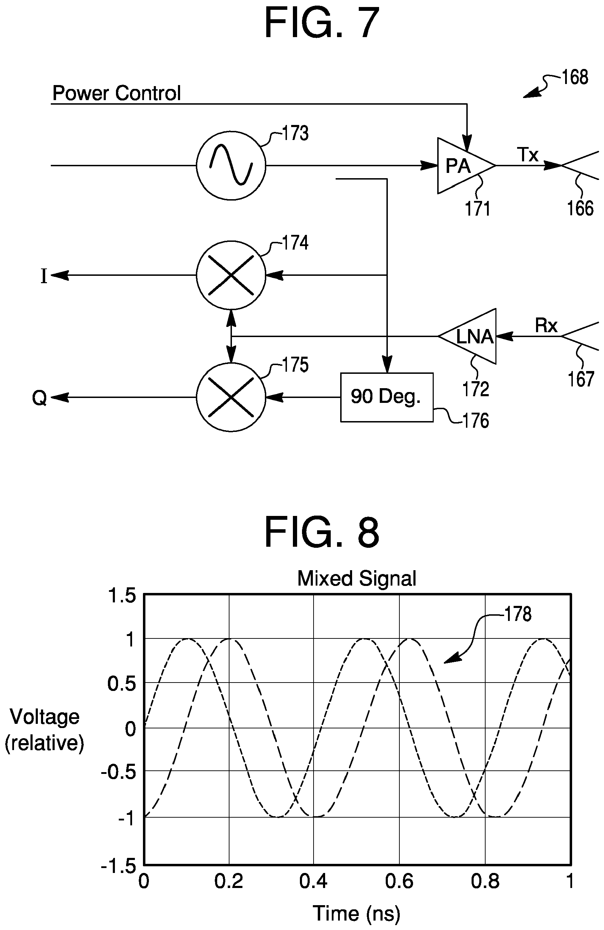

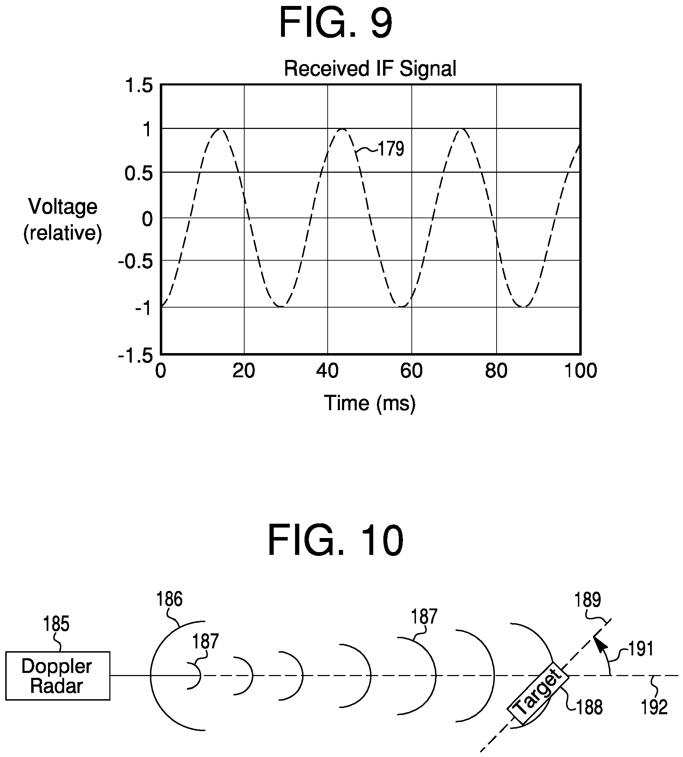

Transceiver 162 may have a signal mixing circuit 168 as shown in a diagram of Figure 7. A microwave transmit-receive controller 169 may provide a power control signal to an amplifier 177, which has an output antenna 166. A continuous wave (CW)/frequency modulated (FMCW)/frequency step keying (FSK) input signal may go a voltage-controlled oscillator (VCO) 173, from controller 171. An example frequency of a signal to VCO 173 may be 20 to 30 GHz, such as 24.125 GHz. Transmitted signal 163 from antenna 166 may be a signal from VCO 173 that is amplified by power amplifier 171. Received signal 165 from antenna 167 may go to amplifier 172 and be amplified to a magnitude useful as an input to mixers 174 and 175. The signal from VCO 173 may be an input to mixer 174 and a signal shifted 90 degrees at phase shifter 176 from VCO 173 may be input to mixer 175. Mixers 174 and 175 may output mixed signals that go to a filter and amplifier 177. A mixed signal 178 from circuit 168 is shown in Figure 8. Signal 178 may be conditioned at filter and amplifier 177 and provided as an intermediate frequency (IF) signal 179, as shown in Figure 9. From MCU 181, signal 179 may be further processed and sent to a monitor 182, via, for example, an RS 232 connection. At monitor 182, a distance, speed and direction of object 164 may be provided.

Figure 10 is a diagram of a Doppler principle that may be incorporated by device 161. A Doppler radar 185 may a transmit a signal 187 from an antenna 186. Signal 187 may hit and be reflected by a target 188 traveling in a direction 189 at an angle $\phi$ 191 relative to a direction 192 of a transmitted signal 187. A frequency $F_d$ of a Doppler shift caused by relative motion of target 188 to antenna 186 may be $F_d = (2V(f_o/c)\cos\phi)$ where $f_o$ is a frequency of transmitted signal 187 in hertz, c is a velocity of light in meters per second, V is a velocity of target 188 in meters per second, and $\phi$ is angle 191 between a direction 192 of transmitted signal or micro beam 187 and direction 189 of a path of target 188. In Fig. 10 relative distance may be to a target relative to the radar source which may be movable or moving, and unqualified distance could be from a fixed point.

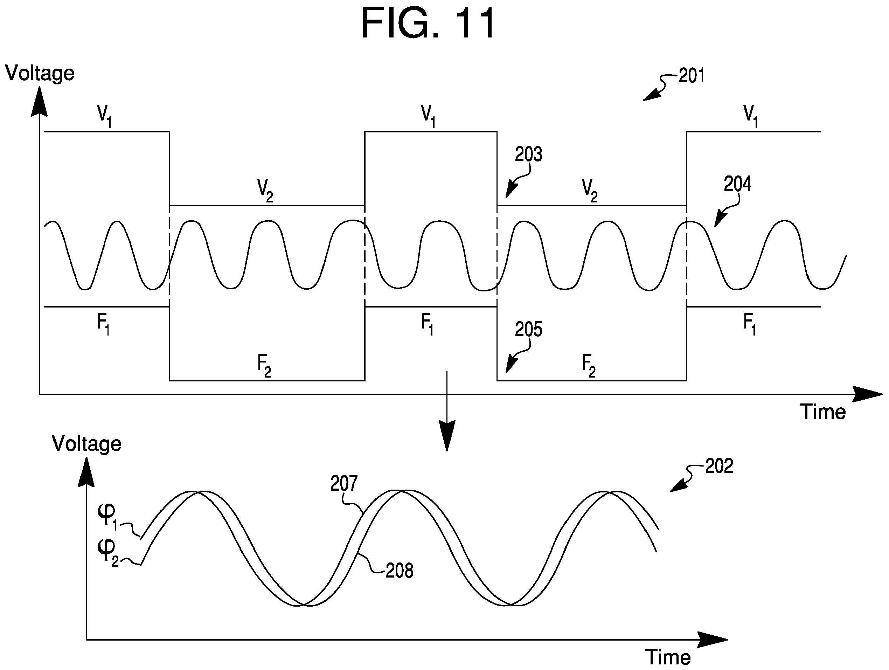

Figure 11 is a diagram of a FSK (frequency shift keying) ranging principle that may be incorporated in device 161. Graph 201 reveals voltage versus time waveforms 203, 204 and 205. Waveform 203 shows a modulated voltage shifted between two voltage levels $V_1$ and $V_2$. Waveform 204 is of a transmitted signal. Waveform 205 shows a transmitted frequencies of the transmitted signal indicated by two voltage levels, $V_1$ and $V_2$, that represent a first frequency $(f_1)$ and a second frequency $(f_2)$, respectively, which are alternated in sync according to voltage levels $V_1$ and $V_2$ of waveform 203. Graph 202 reveals a received IF signal that constitutes sinusoidal signals 207 and 208 having phases $\varphi_1$, and $\varphi_2$, respectively. A range R may be determined by:

$$R = -(c*(\varphi_2 - \varphi_1)/(4\pi*(f_2-f_1) = -(c*\Delta\varphi)/4\pi*f_{step}).$$

This is an example of finding a range used in the present invention.

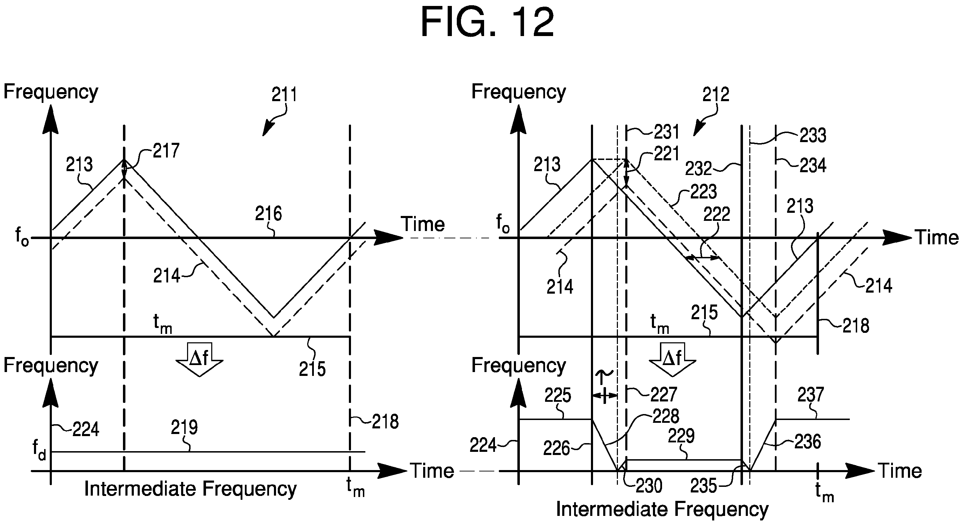

Figure 12 is a diagram of a frequency modulated continuous wave (FMCW) principle as indicated by graph portions 211 and 212 in view of frequency versus time. Graph portion 211 shows a relationship between a transmit signal 213 and a receive signal 214. A double-arrowed line 215 and 218 reveal a modulation period $(t_M)$. Line 216 indicates a carrier or transmitter frequency $(f_0)$. A double-arrowed line reveals a relative velocity $(\sim V_{rel})$. Line 219 indicates a Doppler frequency.

Graph portion 212 is similar to graph portion 211, but with some differences. In an upper part graph portion 212, a delay of signal 214 is shown in comparison to signal 213 in graph 211. The delay may be illustrated by a signal 223. A difference between the frequencies of signal 213 and 214 may be indicated by a double-arrowed line 221, which may indicate relative speed $(\sim V_{rel})$. A double-arrowed line 222 between signals 213 and 223 may emphasize a delay in time between the signals and may be interpreted as relative distance $(\sim rel\ distance)$.

A lower part of graph portion 212 may indicate various frequencies along the time line for modulation period 218. From a start of modulation period at line 224, a sum $(f_b+f_d)$ of beat frequency $(f_b)$ and Doppler frequency $(f_d)$ may be indicated by line 225 between time line 224 and a time line 226. This sum may be regarded as $f_1$. Between line 226 and a time line 227 $(\tau)$ is a drop in frequency along line 228. The frequency may be bumped up along a short line 230 to line 229 at time line 231. The frequency at line 229 may be a difference $(f_b-f_d)$ of beat frequency $(f_b)$ and Doppler frequency $(f_d)$, which may be regarded as $f_2$. A reversal of this change may occur along time lines 232, 233 and 234, and frequency lines 235, 236 and 237, respectively. The following equations may be used for range (R) and velocity (V) determinations in the present invention:

$$V = (c*f_d)/(2*f_o),$$

$$R = (c*f_b*t_M)/(8*f_h),$$

$$f_d = (1/2) * |f_1 - f_2|,$$

and

$$f_b = (1/2) * (f_1 - f_2),$$

where $f_o$ = transmitter frequency, $f_h$ = modulation range, $t_M$ = modulation period, $f_b$ = beat frequency, $f_d$ = Doppler frequency, and c = speed of light.

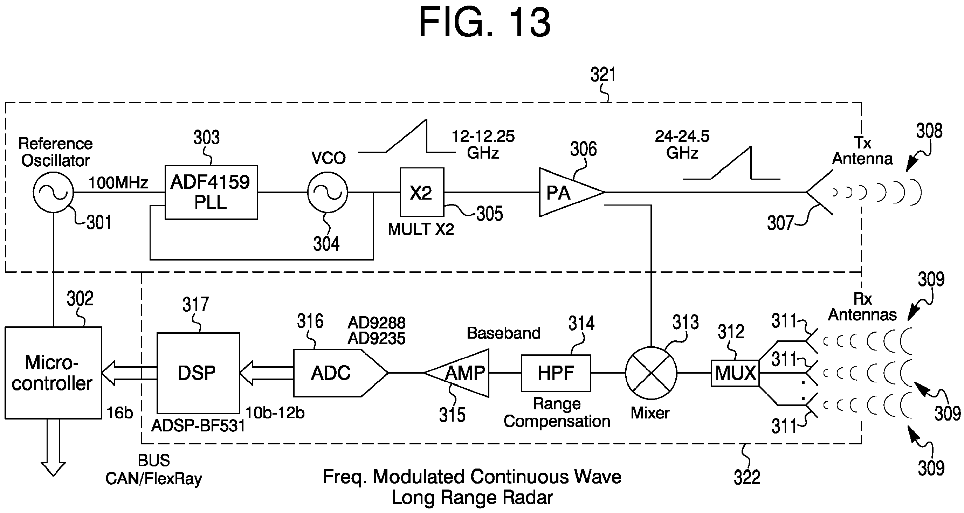

Figure 13 is a diagram that shows another basis for the present system. The system may be regarded as a frequency modulated continuous wave (FMCW) long range radar. A reference oscillator 301 may provide a 100 MHz signal to a microcontroller 302 and to a linear frequency sweep device (e.g., an ADF4159 PLL) 303. A direct digital synthesizer (DDS) is not necessarily required with the ADF4159. A signal may be provided by device 303 to a voltage-controlled oscillator (VCO) 304. An output from VCO 304 may be fed to an input of device 303 to result in a phase-locked loop (PPL) and fed to an input of a X2 multiplier 305 which may multiply a 12 to 12.25 GHz signal to a 24 to 24.5 GHz signal. Other frequencies may be output from oscillators 301 and 304. Components 301, 303, 304, 305, 306 and 307 may be of a transmitter module 321. Components 311, 312, 313, 314, 315, 316 and 317 may be of a receiver module 322.

An output from multiplier 305 may go to a power amplifier 306, which may provide a transmit signal to an antenna 307. Antenna 307 may emanate a signal 308 outward. Signal 308 may be reflected by an object as a signal 309, which may be detected by one or more receiving receiver antennas 311. Signals 309 on antennas 311 may go to a multiplexer 312. Signal 309, which might be multiplexed or not, may go to a mixer 313. Signal 309 may be mixed with signal 308. A mixed signal 314 may go to a high pass filter 314 to provide a baseband and range compensation in an output that may go to an amplifier 315. An output from amplifier 315 may go to an analog-to-digital converter (ADC) 316 (e.g., AD9288 or AD9235). A digital output may go from ADC 316 to a digital signal processor 317, which may provide an output to microcontroller 302. Controller 302 may output results or information about the object detected to, for example, CAN, LIN, FlexRay, and/or other buses, conveyances, nets and recipients.

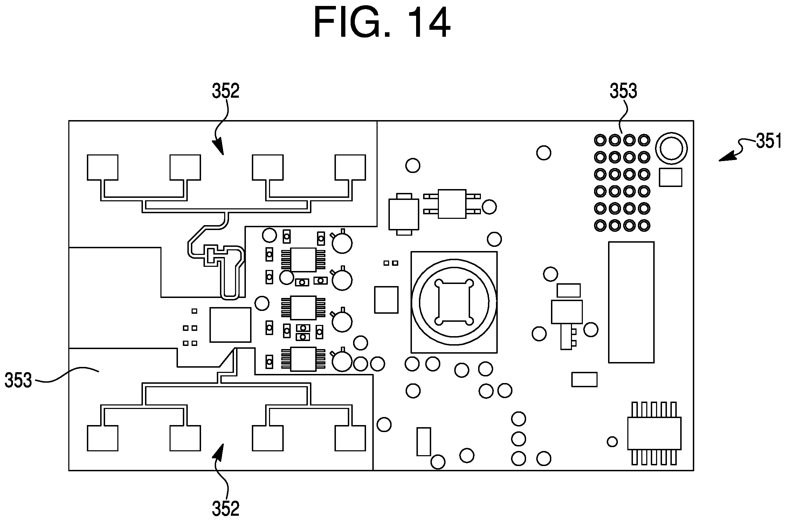

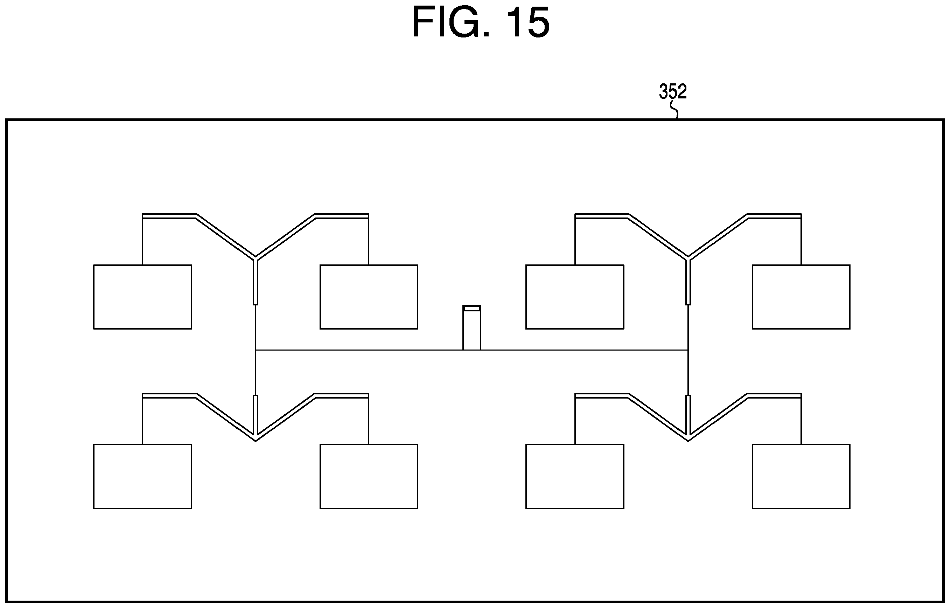

Figure 14 is a diagram of a built advanced intrusion device 351. Device 351 may incorporate electronic components as shown in Figures 4 and/or 13. Monitor 182 may be a stand-alone component relative to device 351. An antenna assembly 352 may be situated at one end of device 351. The components may be situated on a printed circuit board 353. The layout of device 351 on board 353 is just an illustrative example of a reduction to practice of the hardware items. Figure 15 is a diagram of antenna assembly 352.

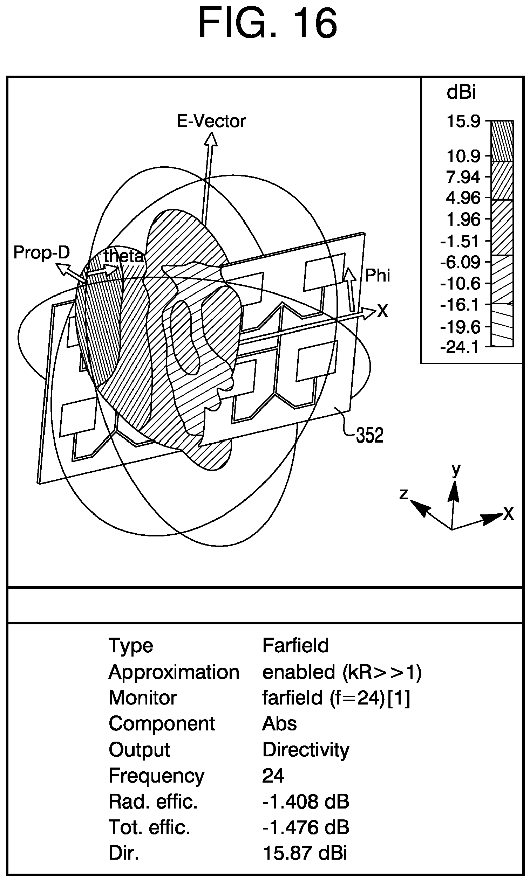

Figure 16 is a diagram of the properties of an example antenna assembly 352 in a context of three-dimensional vectors. Properties of assembly 352 may include a fair field type, an approximation enabled (kR>>1), far field monitor (f = 24), Abs. component, directivity output, 24 GHz frequency, -1.408 dB radiative efficiency, -1.476 dB total efficiency, and a directivity of 15.87 dBi.

Figures 13 and 16 show the equipment for emitting radiation and receiving the reflected radiation, and specifications of an antenna that might be used. The following equations may be used for range (R) and velocity (V) determinations in the present invention:

$$V = (c * f_d) / (2 * f_o),$$

$$R = (c * f_b * t_M) / (8 * f_h)$$

$$f_d = (1/2) * |f_1 - f_2|,$$

and

$$f_b = (1/2) * (f_1 - f_2),$$

where $f_o$ = transmitter frequency, $f_h$ = modulation range, $t_M$ = modulation period, $f_b$ = beat frequency, $f_d$ = Doppler frequency, and c = speed of light. [Top of page 9.]

Another equation on top of page 8 is A range R may be determined by:

$$R = -(c*(\varphi_2 - \varphi_1)/(4\pi*(f_2-f_1)) = -(c*\Delta\varphi)/4\pi*f_{step}).$$

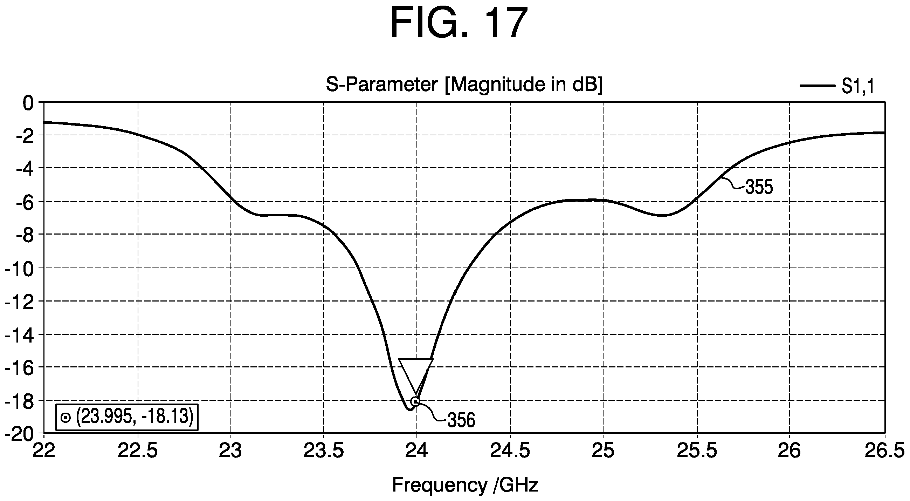

Figure 17 is a diagram of a graph showing a curve 355 in an S-parameter for antenna assembly 352, in terms of magnitude in dB versus frequency. A peak 356 may be noted at -18.13 db and 23.995 GHz.

Features of the present device and approach may be noted. As to a design for an intrusion device, it may be more reliable as a MW type detecting motion due to its smart detecting function, such as motion, velocity, direction and positions. Specifically, the combination of these functions (optionally including volume of space before the detector within a given distance) may enable sources of false alarms, such as from distant but large objects and smaller collections of objects (such as insects) to differentiated from the signature of a human intruder and so reduce false alarms. The present approach and apparatus may detect motion, velocity, direction and distance. These parameters may be useful for improving device performance and reducing false alarms; The design may be used for other intrusion control, such as controlling the video flow according to the intruder's density or the intruder's distance from the apparatus. Density is determined by identifying velocity, direction and distance such that if a plurality identified features have equivalent measures they can be designated as separate objects in a given space and not a single (and hence denser unit). Density may help where if the intruder size big enough or the distance is close enough in contrast with items such as very small insects (whose movement approximates to the above equivalent criteria. This helps to distinguish a person as an intruder from among other things, insects, and avoid false alarms. Using the velocity and distance information for an intruder monitor, the monitor may recognize the status of intrusion status/events and avoid the false/missing alarms. Also, the present approach may be reliable and convenient for many applications. Specifically, the present approach may use an MW signal. The test results may be positive. The approach may process intrusion/motion events accurately for customized space, direction and speeds;

The present approach may have substantive differences relative to other structures. The dual-tech intrusion device may be easily trigger false alarms due to some interference (it may be difficult to immunize) triggering MW if the intruder size big enough or the distance close enough such as with very small insects. It is not necessarily reliable for easily resulting in false alarms or/and missing alarms and cannot meet customized speed, direction and position. The present approach is designed to solve these issues. The present approach may have better performance, easily meet request and be used with many MW type security devices. The present approach may be more accurate and reliable for MW detecting. It may have wide application for customized function opportunities.

The present approach may be customized for use with other devices, such as video flow control, lighting control, industrial control, long-range security detecting, and so on.

To recap, an intrusion detection system may incorporate a controller, a transmitter module connected to the controller, and a receiver module connected to the controller. The controller may incorporate an output for connection to an intrusion alarm. If an object detected by the receiver module is determined by the controller to have a speed within a predetermined range and a distance from a detection point within a predetermined range, then the object may be classified as an intruder.

A setting may let just a detection of an intruder trigger an intrusion alarm.

The predetermined range of speed may be between A and B units. A is equal to or greater than zero and B is greater than A.

The predetermined range of distance may be between C and D units. C is equal to or greater than zero and D is greater than C.

The transmitter module may incorporate a signal generator connected to the controller, a power amplifier connected to the signal generator, and a transmission antenna connected to the power amplifier. The receiver module may incorporate a receiving antenna, a mixer connected to the receiving antenna and the power amplifier, and a receiver amplifier connected to the mixer and the controller.

The transmitter module may incorporate a signal generator connected to the controller, a phase-locked loop connected to the signal generator, a power amplifier connected to the phase-locked loop, and a transmission antenna connected to the power amplifier.

The receiver module may incorporate a receiving antenna, a mixer connected to the receiving antenna and the power amplifier, a band pass filter connected to the mixer, a receiver amplifier connected to the band pass filter, and an analog-to-digital converter connected to the receiver amplifier and the controller.

The transmitter module, the receiver module, the antennas, and the controller may be formed on a single printed circuit board.

A direction of movement of the intruder may be determined.

An intruder detection mechanism may incorporate a transmitter, a receiver, and a controller. The transmitter may emit an electromagnetic transmission signal. The receiver may detect a reflected signal of the electromagnetic transmission signal. The controller may process an attenuated electromagnetic transmission signal and the reflected signal into speed and distance information about an object that caused the reflected signal. The speed and distance information may indicate whether the object is an intruder.

The controller may report just a detection of an object that has a range of speed between W and X.

The controller may report just detection of an object that has a distance between Y and Z from a predetermined location.

The controller may report only a detection of just one or more objects that have a speed just between W and X and have a distance between Y and Z from a predetermined location. W is a lower cutoff speed, X is an upper cutoff speed, Y is a lower cutoff distance, and Z is a higher cutoff distance.

A direction of movement by an object may be determined by the controller.

The reflected signal may have a bandwidth in the IR range or the microwave range.

The field of view of a beam aperture of the receiver may be F degrees by G degrees. F and G are numbers.

The field of view of the beam aperture of the receiver may be adjustable.

An approach for detection of intrusion, may incorporate self-testing a passive infrared (IR) module, self-testing a microwave module, activating a fault alarm if the passive infrared module or the microwave module fails the self-testing, and checking whether the passive infrared module triggers the fault alarm. If the passive IR module does not trigger the fault alarm, then check again whether the passive infrared module triggers the fault alarm, until the passive infrared module triggers the fault alarm or the approach is terminated. If the passive infrared module triggers the fault alarm, then microwave series data from the microwave module may be stored. A velocity of an intruder may be calculated. Whether the intruder has a velocity in a predetermined range may be checked. If the intruder has not a velocity in the predetermined range, then check again whether the passive infrared module triggers the fault alarm, or if the intruder has a velocity in the predetermined range, then calculate a distance between the intruder and a detection device. Whether the intruder is within a predetermined distance of the detection device may be checked. If the signal indicating a potential intruder is not within a predetermined distance of the detection device, then whether the passive infrared module triggers the fault alarm may be checked again. If the intruder is within a predetermined distance of the detection device, then an intrusion alarm may be triggered.

Information of the speed of the intruder may incorporate a direction of movement by the intruder as a velocity.

Any publication or patent document noted herein is hereby incorporated by reference to the same extent as if each publication or patent document was specifically and individually indicated to be incorporated by reference.

In the present specification velocity is speed and direction of a detected object (the intruder or target) relative to the sensor (transmitter and receiver modules) unless otherwise specified. Speed is the speed component of a velocity.

Volume of space before a detector is determinable by simple mathematics and trigonometry from range and area measurements.

In the present specification, some of the matter may be of a hypothetical or prophetic nature although stated in another manner or tense.

Although the present system and/or approach has been described with respect to at least one illustrative example, many variations and modifications will become apparent to those skilled in the art upon reading the specification. It is therefore the intention that the appended claims be interpreted as broadly as possible in view of the related art to include all such variations and modifications.

Preferred Embodiments of the Present Invention are as numbered below:

1. An intrusion detection system comprising:

a controller;
a transmitter module connected to the controller; and
a receiver module connected to the controller; and
wherein:

the controller comprises an output for connection to an intrusion alarm; and
if an object detected by the receiver module is determined by the controller to have a speed within a predetermined range and a distance from a detection point within a predetermined range, then the object is classified as an intruder.

2. The system of 1, wherein a setting may let just a detection of an intruder trigger an intrusion alarm.

3. The system of 1, wherein:

the predetermined range of speed is between A and B units;
A is equal to or greater than zero; and

B is greater than A.

4. The system of 3, wherein:

the predetermined range of distance is between C and D units; and
C is equal to or greater than zero; and
D is greater than C.

5. The system of 1, wherein:

the transmitter module comprises:

a signal generator connected to the controller;
a power amplifier connected to the signal generator; and
a transmission antenna connected to the power amplifier; and

the receiver module comprises:

a receiving antenna;
a mixer connected to the receiving antenna and the power amplifier; and
a receiver amplifier connected to the mixer and the controller.

6. The system of 1, wherein the transmitter module comprises:

a signal generator connected to the controller;
a phase-locked loop connected to the signal generator;
a power amplifier connected to the phase-locked loop; and
a transmission antenna connected to the power amplifier.

7. The system of 6, wherein the receiver module comprises:

a receiving antenna;
a mixer connected to the receiving antenna and the power amplifier;
a band pass filter connected to the mixer;
a receiver amplifier connected to the band pass filter; and
an analog-to-digital converter connected to the receiver amplifier and the controller.

8. The system of 7, wherein the transmitter module, the receiver module, the antennas, and the controller are formed on a single printed circuit board.

9. The system of 1, wherein a direction of movement of the intruder is determined.

10. An intruder detection mechanism comprising:

a transmitter;
a receiver; and
a controller; and
wherein:

the transmitter emits an electromagnetic transmission signal;
the receiver detects a reflected signal of the electromagnetic transmission signal;
the controller processes an attenuated electromagnetic transmission signal and the reflected signal into speed and distance information about an object that caused the reflected signal; and
the speed and distance information indicate whether the object is an intruder.

11. The mechanism of 10, wherein the controller reports just a detection of an object that has a range of speed between W and X.

12. The mechanism of 11, wherein the controller reports just detection of an object that has a distance between Y and Z from a predetermined location.

13. The mechanism of 10, wherein the controller reports just a detection of one or more objects that have a speed between W and X and have a distance between Y and Z from a predetermined location.

14. The mechanism of 13, wherein:

W is a lower cutoff speed;
X is an upper cutoff speed;
Y is a lower cutoff distance; and
Z is a higher cutoff distance.

15. The mechanism of 10, wherein a direction of movement by an object is determined by the controller.

16. The mechanism of 10, wherein the reflected signal may have a bandwidth in the IR range or the microwave range.

17. The mechanism of 10, wherein:

the field of view of a beam aperture of the receiver is F degrees by G degrees; and
F and G are numbers.

18. The mechanism of 17, wherein the field of view of the beam aperture of the receiver is adjustable.

19. A method for detection of intrusion, comprising:

self-testing a passive infrared (IR) module;
self-testing a microwave module;
activating a fault alarm if the passive infrared module or the microwave module fails the self-testing; and
checking whether the passive infrared module triggers the fault alarm; and
wherein:

if the passive IR module does not trigger the fault alarm, then check again whether the passive infrared module triggers the fault alarm, until the passive infrared module triggers the fault alarm or the method is terminated;
if the passive infrared module triggers the fault alarm, then store microwave series data from the microwave module;
a velocity of an intruder is calculated;
whether the intruder has a velocity in a predetermined range is checked;
if the intruder has not a velocity in the predetermined range, then check again whether the passive infrared module triggers the fault alarm, or if the intruder has a velocity in the predetermined range, then calculate a distance between the intruder and a detection device;
whether the intruder is within a predetermined distance of the detection device is checked;
if the intruder is not within a predetermined distance of the detection device, then check again whether the passive infrared module triggers the fault alarm; and
if the intruder is within a predetermined distance of the detection device, then an intrusion alarm is triggered.

20. The method of 19, wherein information of the velocity of the intruder incorporates a direction of movement by the intruder.

21. Any preceding claim in which the parameters of velocity and distance from the detector module are determined and from which (configured to or providing the step of) distances beyond a threshold in combination with velocities above a threshold are deemed to be false alarms.

22. Any preceding claim in which the parameters of velocity and distance from the detector module are determined and from which (configured to or providing the step of) a density parameter is determined where the number of objects above a velocity in a given space within a distance from the detector are compared to thresholds above and below which, respectively, the detection is deemed to be false alarms.

23. Claim 22 in which the number of objects at a velocity is greater than 20 and the distance is less than 10m and the area in which the objects are present is less then 10m$^3$ is deemed to be a false alarm.

**Claims**

1. An intrusion detection system comprising:

   a controller;
   a transmitter module connected to the controller; and
   a receiver module connected to the controller; and
   wherein:

   the controller comprises an output for connection to an intrusion alarm; and
   if an object detected by the receiver module is determined by the controller to have a speed within a predetermined range and a distance from a detection point within a predetermined range, then the object is classified as an intruder.

2. The system of claim 1, wherein a setting may let just a detection of an intruder trigger an intrusion alarm.

3. The system of claim 1, wherein:

   the predetermined range of speed is between A and B units;
   A is equal to or greater than zero;
   B is greater than A;
   the predetermined range of distance is between C and D units; and
   C is equal to or greater than zero; and
   D is greater than C.

4. The system of claim 1, wherein:

   the transmitter module comprises:

   a signal generator connected to the controller;
   a power amplifier connected to the signal generator; and
   a transmission antenna connected to the power amplifier; and

   the receiver module comprises:

   a receiving antenna;
   a mixer connected to the receiving antenna and the power amplifier; and
   a receiver amplifier connected to the mixer and the controller.

5. The system of claim 1, wherein:

   the transmitter module comprises:

   a signal generator connected to the controller;
   a phase-locked loop connected to the signal generator;
   a power amplifier connected to the phase-locked loop; and
   a transmission antenna connected to the power amplifier; and

   the receiver module comprises:

   a receiving antenna;
   a mixer connected to the receiving antenna and the power amplifier;
   a band pass filter connected to the mixer;
   a receiver amplifier connected to the band pass filter; and

an analog-to-digital converter connected to the receiver amplifier and the controller.

6. The system of claim 5, wherein the transmitter module, the receiver module, the antennas, and the controller are formed on a single printed circuit board.

7. The system of claim 1, wherein a direction of movement of the intruder is determined.

8. An intruder detection mechanism comprising:

a transmitter;
a receiver; and
a controller; and
wherein:

the transmitter emits an electromagnetic transmission signal;
the receiver detects a reflected signal of the electromagnetic transmission signal;
the controller processes an attenuated electromagnetic transmission signal and the reflected signal into speed and distance information about an object that caused the reflected signal; and
the speed and distance information indicate whether the object is an intruder.

9. The mechanism of claim 8, wherein:

the controller reports just a detection of an object that has a range of speed between W and X; and
the controller reports just detection of an object that has a distance between Y and Z from a predetermined location.

10. The mechanism of claim 8, wherein:

the controller reports just a detection of one or more objects that have a speed between W and X and have a distance between Y and Z from a predetermined location;
W is a lower cutoff speed;
X is an upper cutoff speed;
Y is a lower cutoff distance; and
Z is a higher cutoff distance.

11. The mechanism of claim 8, wherein a direction of movement by an object is determined by the controller.

12. The mechanism of claim 8, wherein the reflected signal may have a bandwidth in the IR range or the microwave range.

13. The mechanism of claim 8, wherein:

the field of view of a beam aperture of the receiver is F degrees by G degrees;
F and G are numbers; and
the field of view of the beam aperture of the receiver is adjustable.

14. A method for detection of intrusion, comprising:

self-testing a passive infrared (IR) module;
self-testing a microwave module;
activating a fault alarm if the passive infrared module or the microwave module fails the self-testing; and
checking whether the passive infrared module triggers the fault alarm; and
wherein:

if the passive IR module does not trigger the fault alarm, then check again whether the passive infrared module triggers the fault alarm, until the passive infrared module triggers the fault alarm or the method is terminated;
if the passive infrared module triggers the fault alarm, then store microwave series data from the microwave module;

a velocity of an intruder is calculated;

whether the intruder has a velocity in a predetermined range is checked;

if the intruder has not a velocity in the predetermined range, then check again whether the passive infrared module triggers the fault alarm, or if the intruder has a velocity in the predetermined range, then calculate a distance between the intruder and a detection device;

whether the intruder is within a predetermined distance of the detection device is checked;

if the intruder is not within a predetermined distance of the detection device, then check again whether the passive infrared module triggers the fault alarm; and

if the intruder is within a predetermined distance of the detection device, then an intrusion alarm is triggered.

15. The method of claim 14, wherein information of the velocity of the intruder incorporates a direction of movement by the intruder.

# FIG. 1

PYRO Module ~111
PIR signal processing ~112
PIR Module ~110

PIR_AD
MCU
130

SPI 1
120

Digital Potentiometer ~126
SPI 2

ANT1 ~121
ANT2 ~122
MMIC ~123
Filter & Amp 1 ~124
Filter & Amp 2 ~125

Output_CTL ⟶ Alarm
MW_AD
SPI 3

ADF4158CCPZ (Modulation/Waveform Generating) ~127

Smart MW Module

EP 3 355 289 A1

13

# FIG. 2

Initialization OK ~141

142
Is PIR self-test ok?
Is MW self-test ok? — no → Fault alarm ~140

yes

143
PIR trigger alarm? — no →

yes

Store the smart MW series signal data ~144

Calculate the velocity of intruder ~145

146
The intruder velocity in range? — no →

yes

Calculate the distance between the intruder and device ~147

148
The intruder distance in range? — no →

yes

Intrusion alarm triggered ~149

# FIG. 3

# FIG. 4

# FIG. 5

Transmitted Signal

# FIG. 6

Received Signal

# FIG. 7

# FIG. 8

# FIG. 9

**Received IF Signal**

# FIG. 10

# FIG. 11

EP 3 355 289 A1

# FIG. 12

EP 3 355 289 A1

# FIG. 13

321

Reference Oscillator
100MHz
301

ADF4159 PLL
303

VCO
304

X2
MULT X2
305

12-12.25 GHz

PA
306

24-24.5 GHz

307

Tx Antenna
308

302
Micro-controller
16b
BUS CAN/FlexRay

DSP
ADSP-BF531
317
10b-12b

ADC
AD9288 AD9235
316

AMP
315
Baseband

HPF
Range Compensation
314

Mixer
313

MUX
312

311  311  311

Rx Antennas
309  309  309

322

Freq. Modulated Continuous Wave
Long Range Radar

# FIG. 14

# FIG. 15

EP 3 355 289 A1

# FIG. 16

| Type | Farfield |
|---|---|
| Approximation | enabled (kR>>1) |
| Monitor | farfield (f=24)[1] |
| Component | Abs |
| Output | Directivity |
| Frequency | 24 |
| Rad. effic. | -1.408 dB |
| Tot. effic. | -1.476 dB |
| Dir. | 15.87 dBi |

# FIG. 17

S-Parameter [Magnitude in dB]  ——— S1,1

(23.995, -18.13)

355

356

Frequency /GHz

EP 3 355 289 A1

Europäisches
Patentamt

European
Patent Office

Office européen
des brevets

**EUROPEAN SEARCH REPORT**

Application Number

EP 18 15 3319

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/115164 A1 (WU XIAODONG [US] ET AL) 24 May 2007 (2007-05-24) * abstract * * paragraph [0027] - paragraph [0039]; figures 1,2 * | 1-6, 8-10,12 | INV. G08B13/24 ADD. G01S13/88 |
| X | US 2008/218340 A1 (ROYER GREGORY [US]) 11 September 2008 (2008-09-11) * abstract * * paragraph [0029] - paragraph [0034]; figure 1 * * paragraph [0040] - paragraph [0049]; figure 2 * | 1-13 | |
| A | US 2009/051529 A1 (TSUJI MASATOSHI [JP]) 26 February 2009 (2009-02-26) * abstract * * paragraph [0073] - paragraph [0090]; figures 1,4 * * paragraph [0092] - paragraph [0099]; figure 5 * | 1-6, 8-10,12 | |
| A | US 5 331 308 A (BUCCOLA CHARLES S [US] ET AL) 19 July 1994 (1994-07-19) * abstract * * column 4, line 31 - column 5, line 12; figure 1 * * column 2, line 49 - column 3, line 28; figure 1 * | 14,15 | TECHNICAL FIELDS SEARCHED (IPC) G08B G01S |

The present search report has been drawn up for all claims

| Place of search | Date of completion of the search | Examiner |
|---|---|---|
| Munich | 27 April 2018 | Heß, Rüdiger |

EPO FORM 1503 03.82 (P04C01)

## ANNEX TO THE EUROPEAN SEARCH REPORT
## ON EUROPEAN PATENT APPLICATION NO.

EP 18 15 3319

This annex lists the patent family members relating to the patent documents cited in  the above-mentioned European search report.
The members are as contained in the European Patent Office EDP file on
The European Patent Office is in no way liable for these particulars which are merely given for the purpose of information.

27-04-2018

| Patent document cited in search report | | | Publication date | Patent family member(s) | | | Publication date |
|---|---|---|---|---|---|---|---|
| US 2007115164 | A1 | | 24-05-2007 | AT | 547781 | T | 15-03-2012 |
| | | | | CN | 1971643 | A | 30-05-2007 |
| | | | | EP | 1793356 | A2 | 06-06-2007 |
| | | | | ES | 2382342 | T3 | 07-06-2012 |
| | | | | US | 2007115164 | A1 | 24-05-2007 |
| US 2008218340 | A1 | | 11-09-2008 | EP | 1968025 | A1 | 10-09-2008 |
| | | | | US | 2008218340 | A1 | 11-09-2008 |
| US 2009051529 | A1 | | 26-02-2009 | EP | 1873553 | A1 | 02-01-2008 |
| | | | | JP | 3867805 | B2 | 17-01-2007 |
| | | | | JP | 2006292537 | A | 26-10-2006 |
| | | | | US | 2009051529 | A1 | 26-02-2009 |
| | | | | WO | 2006109771 | A1 | 19-10-2006 |
| US 5331308 | A | | 19-07-1994 | EP | 0581569 | A1 | 02-02-1994 |
| | | | | ES | 2083827 | T3 | 16-04-1996 |
| | | | | US | 5331308 | A | 19-07-1994 |

EPO FORM P0459

For more details about this annex : see Official Journal of the European Patent Office, No. 12/82